# FASCICULE DE BREVET EUROPEEN

(11) **EP 1 173 074 B1**
(45) Date de publication et mention de la délivrance du brevet: **11.05.2005**
(21) Numéro de dépôt: 00907407.1
(22) Date de dépôt: 16.03.2000
(51) Int. Cl.: A44C 5/10

(54) **BRACELET COMPORTANT DES MAILLONS AMOVIBLES**
ARMBAND MIT LÖSBAREN GLIEDERN
WATCH BAND WITH REMOVABLE LINKS

(30) Priorité: 29.04.1999 CH 78699
(43) Date de publication de la demande: 23.01.2002
(73) Titulaire: Tag-Heuer S.A., 2074 Marin-Epagnier (CH)
(72) Inventeur: GR GUITCH, Ivan, CH-2000 Neuchâtel (CH); DUBOIS, Antoine, F-25130 Villers-le-Lac (FR)
(74) Mandataire: P&TS Patents & Technology Surveys SA
(86) Numéro de dépôt international: PCT/CH2000/000150
(87) Numéro de publication internationale: WO 2000/065948

(56) Documents cités:
- EP-A- 0 884 007
- CH-A- 661 185
- FR-A- 2 693 355
- GB-A- 2 214 778

## Description

La présente invention concerne un bracelet, notamment un bracelet de montre, comportant des maillons amovibles.

On connaît déjà différentes sortes de bracelets formés de rangées comportant chacune plusieurs maillons reliés à la rangée suivante par des tiges. Le diamètre de ces bracelets peut généralement être adapté au poignet du porteur en démontant une ou plusieurs rangées de maillons.

Le brevet CH676781 (Stelux) par exemple décrit un bracelet formé de rangées de maillons reliés par des goupilles munies d'une gorge annulaire. Certaines goupilles peuvent être démontées au moyen d'une vis perpendiculaire à la goupille. Les vis sont visibles de l'extérieur, ce qui est peu esthétique et peut s'avérer inconfortable pour le porteur du bracelet.

La demande de brevet GB2214778 décrit un bracelet de montre dans lequel les rangées de maillons sont reliées par des tiges serties dans un maillon marginal et engagées librement dans un logement borgne du maillon symétrique. Le bracelet n'est assemblé que lorsque le dernier maillon a été bloqué par la mise en place d'une goupille spéciale. Dans cette construction, les jeux nécessaires pour l'articulation des maillons s'additionnent à chaque rangée, en sorte que le bracelet pourrait se disloquer.

La demande de brevet W089/08997 (Citizen Watch) décrit un bracelet dont les rangées de maillons successifs sont reliées par des goupilles invisibles de l'extérieur. La goupille reliant chaque rangée comporte un méplat permettant de retirer un maillon de chaque rangée en le pivotant de 90°, l'autre maillon de la même rangée pouvant alors être dégagé en le tirant dans le sens de la goupille. Cette solution nécessite un usinage précis des goupilles et des logements pour goupilles dans les maillons.

FR-A1-2693355 décrit un bracelet à maillons articulés comportant plusieurs rangées de deux maillons articulées entre-elles au moyen de goupilles insérées dans des trous borgnes. Le but de D1 est de supprimer toutes les vis au niveau de l'articulation des maillons. Ce bracelet souffre des mêmes inconvénients que celui décrit dans GB2214778.

CH-A5-665185 décrit un bracelet de montre dans lequel les maillons sont articulés au moyen de tiges dissociables. Les tiges sont visibles de l'extérieur, en sort que ce bracelet souffre des mêmes inconvénients que celui décrit dans CH676781.

D'autres systèmes connus utilisent des goupilles à ressort, qui ont toutefois l'inconvénient d'une fiabilité limitée.

Un but de la présente invention est de proposer un nouveau type de bracelet à maillons démontables, différent des bracelets existants.

Un autre but est de proposer un bracelet à maillons démontables qui ne présente pas les inconvénients des bracelets de l'art antérieur.

Ces buts sont atteints selon l'invention au moyen d'un bracelet comportant les caractéristiques de la revendication 1, des variantes préférentielles étant par ailleurs indiquées dans les revendications dépendantes.

L'homme du métier constatera que ces caractéristiques permettent de réaliser, pour un coût modeste, un bracelet à maillons démontables fiable, solide et dont le système de fixation des maillons est pratiquement invisible de l'extérieur.

L'invention s'applique par exemple à la réalisation de bracelets de montre à maillons métalliques ou à tout autre type de bracelets de longueur ajustable.

L'invention sera mieux comprise à l'aide de la description donnée à titre d'exemple et illustrée par les figures annexées qui montrent :
La figure 1 une vue de dessus, et partiellement en coupe, de plusieurs rangées de maillon du bracelet posé à plat, les rangées étant reliées selon un mode de réalisation préférentiel de l'invention.
La figure 2 illustre de manière détaillée une goupille selon un mode de réalisation préférentiel de l'invention.
La figure 3 illustre de manière détaillée une tête de goupille selon un mode de réalisation préférentiel de l'invention.

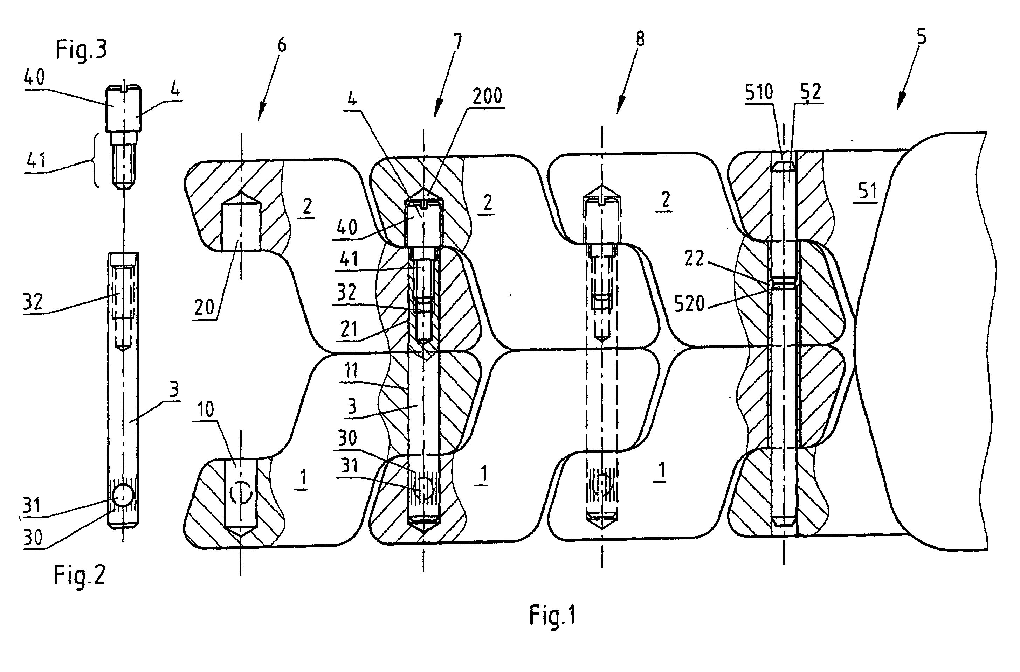

La figure 1 illustre une vue de dessus sur plusieurs rangées de maillons d'un bracelet de montre selon l'invention. Chaque rangée 6, 7, 8 est constituée dans cet exemple d'un maillon droit 1 et d'un maillon gauche symétrique 2. L'invention n'est toutefois pas limitée à des bracelets comportant deux maillons par rangée ; il serait possible par exemple d'insérer un ou plusieurs maillons intermédiaires entre les maillons marginaux 1 et 2. De même, l'invention n'est pas limitée à la forme particulière de maillons illustrée.

Les maillons 1 et 2 de chaque rangée sont maintenus l'un contre l'autre entre une portion des maillons de la rangée suivante. Une tige cylindrique 3, 4 traverse tous les maillons 1, 2 de la rangée par une ouverture 11, 21 présentant un diamètre légèrement supérieur à celui de la tige, de manière à permettre un pivotement sans jeu des rangées de maillons les unes par rapport aux autres. Une première extrémité de la tige, visible plus particulièrement sur la figure 2, est fixée par sertissage dans un trou borgne 10 d'un maillon de la rangée suivante, dans cet exemple un maillon droit 1. La portion de tige sertie dans le trou 10 comporte de préférence un méplat ou un trou borgne 31, permettant de faciliter le sertissage effectué par exemple par un coup de pointeau donné sur la face interne du bracelet et d'empêcher toute rotation de la tige sur son axe propre. La tige comporte en outre de préférence une cannelure périphérique 30 afin notamment de la tenir provisoirement lors du montage, avant le sertissage.

D'autres méthodes de fixation de la tige cylindrique 3 dans le trou borgne 10 peuvent être utilisées dans le cadre de cette invention. La tige pourrait par exemple aussi être vissée dans un trou taraudé ou fixée par soudage, collage ou chassage, ces solutions présentant en outre l'avantage de ne pas laisser de marque de sertissage sur l'extérieur du bracelet. Dans une variante de l'invention, on pourrait aussi utiliser des tiges en alliage à mémoire de forme insérées à température élevée dans le trou borgne. Dans une variante supplémentaire, la tige serait engagée librement dans le trou borgne 10, sans moyens de fixation particulier. On utilisera dans cette variante une tige 3 munie d'une tête engagée dans le trou borgne 10 de diamètre supérieur à celui de l'ouverture 11, 21, la tête pouvant être amovible, par exemple dévissable.

La seconde extrémité de la tige 3, 4 est constituée par une tête 4 pouvant être désolidarisée du reste 3 de la tige 3, 4 et engagée librement dans une ouverture 200 dans un autre maillon de la rangée suivante, dans cet exemple un maillon gauche 2. La tige 3, 4 est ainsi constituée d'une goupille 3 et d'une tête 4, ces deux parties pouvant être dissociées. Sur la figure, la goupille 3 est munie d'un logement taraudé 32 dans laquelle une portion filetée 41 de la tête 4 peut être vissée. La tête comporte en outre une portion 40 de plus grand diamètre, en sorte que les maillons 1, 2 traversés par la goupille 3 ne peuvent être démontés qu'en dévissant la tête 4 de façon à dissocier la tige 3,4.

La longueur de la goupille 3 est de préférence choisie de manière à laisser un léger jeu entre la tête 4 et la portion du maillon 2 qui lui fait face. Les rangées successives de maillon ne sont ainsi pas trop comprimées et peuvent pivoter sans difficulté et sans s'abîmer l'une contre l'autre. De la même façon, un jeu est prévu entre la surface périphérique de la tête 4 et les parois de l'ouverture 200 dans laquelle la tête est logée. De cette manière, la tête 4 n'est pas entraînée en rotation par le pivotement des maillons 1, 2 et ne risque ainsi pas de se dévisser accidentellement. On utilisera de préférence des vis Téflon à coefficient de friction élevé pour limiter encore le risque de dévissage accidentel ; un point de colle pourra aussi être appliqué sur la portion filetée 41. Enfin, la profondeur de l'ouverture 200 est choisie de manière à empêcher un dévissage complet de la tête 4 sans retirer le maillon 2 dans lequel elle est logée. Le jeu maximal possible à chaque rangée est ainsi déterminé par la profondeur des ouvertures 200, en sorte que les jeux dans chaque rangée ne s'additionnent pas lorsque les têtes sont vissées, et que partiellement lorsque les têtes commencent à se dévisser.

Bien que la tige 3, 4 soit dans l'exemple illustré constituée par une goupille 3 et une tête 4 vissée dans une ouverture 32 taraudée dans cette goupille, l'homme du métier comprendra que d'autres types de tiges démontables peuvent être utilisés dans le cadre de cette invention. La tête 4 pourrait par exemple être constituée par un capuchon muni d'un taraudage vissé sur un filetage externe de la tige 3. Dans une variante, la tige pourrait être constituée de deux portions de longueurs sensiblement identiques vissées l'une à l'autre. On pourrait aussi utiliser des têtes munies de vis à cran s'encliquetant dans les goupilles 3 pour une position de vissage déterminée. D'autres types de maillons démontables en deux ou plusieurs parties peuvent facilement être imaginés par l'homme du métier dans le cadre de cette invention.

La dernière rangée 8 de maillons (sur la droite dans la figure 1) est fixée au fermoir 5 ou au boîtier de la montre par un système de fermeture accessible de l'extérieur. Dans l'exemple illustré, le système de fermeture est constitué par une goupille 52 chassée dans une ouverture 510 traversant les deux derniers maillons 1, 2 et les cornes 51 du fermoir. La goupille 52 comporte un cran constitué par une gorge annulaire 520 correspondant à une nervure annulaire 22 dans un des maillons 1 ou 2. L'engagement de la nervure annulaire 22 dans la gorge 520 permet de fixer la position longitudinale de la goupille. La goupille est de préférence chassée dans l'ouverture 510 au moyen d'une pince appropriée de type connu ; un clic audible indique l'engagement correct de la nervure 22 dans la gorge 520.

D'autres systèmes pour fixer la dernière rangée 8 de maillons au fermoir 5 peuvent être imaginés dans le cadre de cette invention. Par exemple, les derniers maillons 1, 2 pourraient être fixés au fermoir 5 ou au boîtier de la montre par une tige dissociable 3, 4 semblable à celle utilisée pour relier les autres rangées, mais logée dans un trou traversant, de manière à ce que la fente de la vis puisse être accédée au moyen d'un tournevis. Cette variante offre l'avantage de pouvoir être démontée à l'aide d'un-tournevis uniquement, mais l'inconvénient de pouvoir se démonter si la vis se desserre. De même, on pourrait fixer la rangée 8 par une simple vis engagée dans un trou taraudé à travers l'une des cornes du fermoir 5.

Le diamètre du bracelet peut être ajusté en démontant tout d'abord le système de fixation 52 de la dernière rangée au fermoir, au moyen d'un poinçon ou d'une pince adaptée. Le maillon gauche 2 de la dernière rangée peut ensuite être démonté très simplement en le tirant vers l'extérieur dans son propre plan, laissant ainsi apparaître la tête 4 de la première tige 3, 4. Cette tête peut être dévissée au moyen d'un tournevis, de façon à dissocier la tige en deux parties 3, 4. Le maillon droit 1 de la dernière rangée peut ensuite être retiré avec la goupille 3 qui lui est solidaire, en la tirant vers l'extérieur dans son propre plan. Il est ensuite possible de retirer le maillon gauche 2 de l'avant-dernière rangée, et ainsi de suite.

De préférence seule une partie des rangées de maillons du bracelet est reliée par des tiges dissociables 3, 4. Les autres maillons ne sont ainsi pas amovibles, en sorte que la marge d'adaptation du bracelet est limitée aux dimensions utiles en pratique. Cela permet d'une part d'utiliser des tiges de construction plus économique pour relier les rangées non amovibles, d'autre part de limiter encore le risque d'addition des jeux entre rangées successives.

## Revendications

1. Bracelet comportant une pluralité de rangées de maillons (1, 2), chaque rangée (6, 7, 8) de maillons comportant au moins deux maillons (1, 2) traversés par une tige (3, 4) engagée dans au moins un maillon (1, 2) de la rangée suivante, de manière à relier les deux rangées de manière articulée,
ladite tige (3, 4) étant accessible uniquement en retirant un maillon (2) de ladite rangée suivante,
**caractérisé en ce que** ladite tige est constituée de plusieurs parties dissociables (3; 4),
et **en ce que** ladite rangée peut être retirée en dissociant ladite tige.

2. Bracelet selon la revendication précédente, **caractérisé en ce que** ladite tige (3, 4) comporte une goupille (3) traversant lesdits au moins deux maillons (1, 2) et une tête (4) fixée de manière amovible à une extrémité de ladite goupille (3).

3. Bracelet selon la revendication précédente, **caractérisé en ce que** l'autre extrémité de ladite goupille (3) est solidaire d'un dit maillon (1) de ladite rangée suivante.

4. Bracelet selon la revendication précédente, **caractérisé en ce que** ladite autre extrémité est sertie dans un logement (10) dudit maillon (1) de ladite rangée suivante.

5. Bracelet selon l'une des revendications 3 ou 4, **caractérisé en ce que** le diamètre de ladite tête (4) est supérieur au diamètre du corps de ladite goupille (3), en sorte que ladite tête permet de limiter le jeu de ladite rangée le long de ladite goupille.

6. Bracelet selon la revendication précédente, **caractérisé en ce que** ladite tête (4) est logée dans un trou borgne (20) d'un dit maillon (2) de ladite rangée suivante.

7. Bracelet selon la revendication précédente, **caractérisé en ce que** la profondeur dudit trou borgne (20) ne permet pas de dévisser ladite tête (4) sans retirer ledit maillon (2) de la rangée suivante.

8. Bracelet selon l'une des revendications 6 ou 7, **caractérisé par** un jeu radial entre ledit trou borgne (20) et ladite tête (4).

9. Bracelet selon l'une des revendications précédentes, **caractérisé en ce que** lesdites parties (3, 4) de ladite tige dissociable sont vissées entre elles.

10. Bracelet selon l'une des revendications 2 à 9, **caractérisé en ce que** ladite goupille (3) possède un logement taraudé (32) dans lequel ladite tête (4) est vissée.

11. Bracelet selon l'une des revendications 9 à 10, **caractérisé en ce que** ladite tête (4) comporte une partie filetée (41) recouverte de Téflon.

12. Bracelet selon l'une des revendications 9 à 11, **caractérisé en ce que** ladite tête (4) est collée à ladite goupille (3).

13. Bracelet selon l'une des revendications précédentes, **caractérisé en ce qu'**il comporte plusieurs rangées de maillon (6, 7, 8) reliées par desdites tiges dissociables (3, 4).

14. Bracelet selon la revendication précédente, **caractérisé en ce qu'**il comporte plusieurs rangées de maillon (6, 7, 8) reliées par des tiges, et **en ce que** seule une partie desdites tiges sont dissociables.

15. Bracelet selon l'une des revendications précédentes, **caractérisé en ce que** la dernière rangée de maillons (8) est assemblée au moyen d'un système d'assemblage (52) accessible de l'extérieur du bracelet.

16. Bracelet selon la revendication précédente, **caractérisé en ce que** ladite dernière rangée de maillons (8) est assemblée au moyen d'une goupille à cran (52).

17. Bracelet selon la revendication précédente, **caractérisé en ce que** ladite goupille à cran (52) comporte une portion (520) de diamètre différent de celui du reste de la goupille.

18. Bracelet selon l'une des revendications précédentes, **caractérisé en ce que** lesdites rangées (6, 7, 8) sont constituées de deux maillons symétriques (1, 2).

19. Montre munie d'un bracelet selon l'une des revendications précédentes.

## Patentansprüche

1. Armband umfassend eine Mehrzahl von Gliedreihen (1, 2), wobei jede Reihe (6, 7, 8) von Gliedern mindestens zwei Glieder (1, 2) umfasst, durchsetzt mit einem Schaft (3, 4), welcher in mindestens ein Glied (1, 2) der nächsten Reihe eindringt, um beide Reihen auf artikulierte Weise zu verbinden,
wobei der benannte Schaft (3, 4) nur durch Herausnehmen eines Glieds (2) der nächsten Reihe zugänglich wird,
**dadurch gekennzeichnet, dass** der benannte Schaft aus mehreren dissoziierbaren Teilen (3, 4) besteht,
und dass die benannte Reihe durch Dissoziieren des benannten Schafts herausgenommen werden kann.

2. Armband gemäss dem vorergehenden Anspruch, **dadurch gekennzeichnet, dass** der bekannte Schaft (3, 4) einen die benannten mindestens zwei Glieder (1, 2) durchdringenden Stift (3) und einen mit einem Ende des benannten Stiftes (3) auf abnehmbare Weise verbundenen Kopf (4) umfasst.

3. Armband gemäss dem vorhergehenden Anspruch, **dadurch gekennzeichnet, dass** das andere Ende des benannten Stiftes (3) mit einem benannten Glied (1) der nächsten Reihe fest verbunden ist.

4. Armband gemäss dem vorhergehenden Anspruch, **dadurch gekennzeichnet, dass** das benannte andere Ende in einer Unterbringung (10) des benannten Glieds (1) der benannten nächsten Reihe eingefasst ist.

5. Armband gemäss einem der Ansprüche 3 oder 4, **dadurch gekennzeichnet, dass** der Durchmesser des benannten Kopfes (4) grösser als der Durchmesser des Körpers des benannten Stiftes (3) ist, so dass der benannte Kopf das Spiel der benannten Reihe entlang des benannten Stiftes einzuschränken vermag.

6. Armband gemäss dem vorhergehenden Anspruch, **dadurch gekennzeichnet, dass** der benannte Kopf (4) in einem Sackloch (20) eines benannten Glieds (2) der nächsten Reihe untergebracht ist.

7. Armband gemäss dem vorhergehenden Anspruch, **dadurch gekennzeichnet, dass** die Tiefe des benannten Sacklochs (20) nicht erlaubt, den benannten Kopf (4) abzuschrauben, ohne das benannte Glied (2) der nächsten Reihe herauszunehmen.

8. Armband gemäss einem der Ansprüche 6 oder 7, durch ein radiales Spiel zwischen dem benannten Sackloch (20) und dem benannten Kopf (4) **gekennzeichnet**.

9. Armband gemäss einem der vorhergehenden Ansprüche, **dadurch gekennzeichnet, dass** die benannten Teile (3,4) des benannten dissoziierbaren Schafts miteinander verschraubt sind.

10. Armband gemäss einem der Ansprüche 2 bis 9, **dadurch gekennzeichnet, dass** der benannte Stift (3) mit einer innengewindeten Unterbringung (32) versehen wird, in welche der benannte Kopf (4) geschraubt wird.

11. Armband gemäss einem der Ansprüche 9 bis 10, **dadurch gekennzeichnet, dass** der benannte Kopf (4) einen gewindeten, mit Teflon beschichteten Teil (41) umfasst.

12. Armand gemäss einem der Ansprüche 9 bis 11, **dadurch gekennzeichnet, dass** der benannte Kopf (4) an den benannten Stift (3) geleimt wird.

13. Armband gemäss einem der vorhergehenden Ansprüche, **dadurch gekennzeichnet, dass** er mehrere Reihen von durch die benannten dissoziierbaren Schafte verbundenen Gliedern (6, 7, 8) umfasst.

14. Armband gemäss dem vorhergehenden Anspruch, **dadurch gekennzeichnet, dass** er mehrere Reihen von durch die benannten dissoziierbaren Schafte verbundenen Gliedern (6, 7, 8) umfasst und dass lediglich ein Teil der benannten Schafte dissoziierbar sind.

15. Armband gemäss einem der vorhergehenden Ansprüche, **dadurch gekennzeichnet, dass** die letzte Reihe von Gliedern (8) mittels eines nur von Ausserhalb des Armbands zugänglichen Montagesystems (52) zusammengebaut wird.

16. Armband gemäss dem vorhergehenden Anspruch, **dadurch gekennzeichnet, dass** die letzte Reihe von Gliedern (8) mittels eines Raststifts (52) zusammengebaut wird.

17. Armband gemäss dem vorhergehenden Anspruch, **dadurch gekennzeichnet, dass** der benannte Raststift (52) einen Teil (520) mit einem Durchmesser ungleich desjenigen des Rests des Stifts umfasst.

18. Armband gemäss einem der vorhergehenden Ansprüche, **dadurch gekennzeichnet, dass** die benannten Reihen (6, 7, 8) aus zwei symmetrischen Gliedern (1, 2) bestehen.

19. Uhr, mit einem Armband gemäss einem der vorhergehenden Ansprüche versehen.

## Claims

1. Bracelet comprising a plurality of rows of links (1, 2), each row (6, 7, 8) of links comprising at least two links (1, 2) traversed by a rod (3, 4) engaged in at least one link (1, 2) of the next row, so as to join the two rows in an articulate manner,
said rod (3, 4) being accessible only by removing a link (2) of said next row,
**characterised in that** said rod is constituted of several dissociable parts (3; 4),
and **in that** said row can be removed by dissociating said rod.

2. Bracelet according to the preceding claim, **characterised in that** said rod (3, 4) comprises a pin (3) traversing said at least two links (1, 2) and a head (4) removably fastened to an extremity of said pin (3).

3. Bracelet according to the preceding claim, **characterised in that** the other extremity of said pin (3) is fixedly united with one said link (1) of said next row.

4. Bracelet according to the preceding claim, **characterised in that** said other extremity is set in a lodging (10) of said link (1) of said next row.

5. Bracelet according to one of the claims 3 or 4, **characterised in that** the diameter of said head (4) is greater than the diameter of the body of said pin (3), so that said head allows the play of said row along said pin to be restricted.

6. Bracelet according to the preceding claim, **characterised in that** said head (4) is lodged in a blind hole (20) of one said link (2) of said next row.

7. Bracelet according to the preceding claim, **characterised in that** the depth of said blind hole (20) does not allow said head (4) to be unscrewed without removing said link (2) of the next row.

8. Bracelet according to one of the claims 6 or 7, **characterised by** a radial play between said blind hole (20) and said head (4).

9. Bracelet according to one of the preceding claims, **characterised in that** said parts (3, 4) of said dissociable rod are screwed to one another.

10. Bracelet according to one of the claims 2 to 9, **characterised in that** said pin (3) is provided with a tapped lodging (32) in which said head (4) is screwed.

11. Bracelet according to one of the claims 2 to 10, **characterised in that** said head (4) comprises a threaded portion (41) covered with Teflon.

12. Bracelet according to one of the claims 2 to 11, **characterised in that** said head (4) is glued to said pin (3).

13. Bracelet according to one of the preceding claims, **characterised in that** it comprises several rows of links (6, 7, 8) joined by said dissociable rods.

14. Bracelet according to the preceding claim, **characterised in that** it comprises several rows of links (6, 7, 8) joined by rods and **in that** only a part of said rods are dissociable.

15. Bracelet according to one of the preceding claims, **characterised in that** the last row of links (8) is assembled by means of a fastening system (52) accessible from the outside of the bracelet.

16. Bracelet according to the preceding claim, **characterised in that** said last row of links (8) is assembled by means of a notched pin (52).

17. Bracelet according to the preceding claim, **characterised in that** said notched pin (52) comprises a portion (520) of a diameter different from that of the rest of the pin.

18. Bracelet according to one of the preceding claims, **characterised in that** said rows (6, 7, 8) are constituted of two symmetrical links (1, 2).

19. Watch provided with a bracelet according to one of the preceding claims.
